# EUROPÄISCHE PATENTSCHRIFT

(11) **EP 2 568 596 B1**
(45) Veröffentlichungstag und Bekanntmachung des Hinweises auf die Patenterteilung: **13.11.2019**
(21) Anmeldenummer: 11180704.6
(22) Anmeldetag: 09.09.2011
(51) Int. Cl.: H02P 6/18, H02P 21/14

(54) **Verfahren und Verarbeitungseinheit zur Bestimmung der Position des Läufers einer Synchronmaschine in Bezug auf den Stator der Synchronmaschine**
Method and processing unit for determining the position of the rotor of a synchronous machine relative to the stator of the synchronous machine
Procédé et unité de traitement destinés à la détermination de la position du rotor d'une machine synchrone en fonction du stator de la machine synchrone

(43) Veröffentlichungstag der Anmeldung: 13.03.2013
(73) Patentinhaber: Siemens Aktiengesellschaft, 80333 München (DE)
(72) Erfinder: Nemeth-Csoka, Mihaly, Dr., 91056 Erlangen (DE)

(56) Entgegenhaltungen:
- DE-A1-102004 008 250
- DE-A1-102005 059 477

## Beschreibung

Die Erfindung betrifft ein Verfahren und eine Verarbeitungseinheit zur Bestimmung der Position des Läufers einer Synchronmaschine in Bezug auf den Stator der Synchronmaschine.

Im Stand der Technik sind zahlreiche Verfahren bekannt, mit denen die Position des Läufers einer Synchronmaschine bestimmt werden kann. Viele dieser Verfahren beruhen auf aufwendigen Messungen der Induktivitäten der Primärkreisspulen, oder auf der Messung und Auswertung der elektromotorischen Gegenkraft. Solche Verfahren erlauben es, eine Synchronmaschine ganz ohne Positionsmessgerät zu betreiben.

Im gesamten vorliegenden Dokument soll der Begriff der Synchronmaschine so verstanden werden, dass er lineare und rotatorische sowie fremd- und selbsterregte Synchronmaschinen umfasst. Der Begriff Synchronmaschine umfasst sämtliche Maschinen, bei denen sich das Läuferfeld synchron zum Ständerfeld bewegt, so dass auch bürstenlose Gleichstrommotoren beziehungsweise elektronisch kommutierte Motoren unter den Begriff Synchronmaschine subsumiert werden. Wenn ein Stromvektor genannt ist, so hat dieser im Zeigerdiagramm den Betrag des aufgrund der eingeprägten Ströme berechneten Raumzeigers und die Richtung des Raumzeigers. Alle auf den Läufer der Synchronmaschine bezogenen Winkelangaben beziehen sich im Folgenden auf eine elektrische Periode, d.h. eine volle Umdrehung des Stromvektors. Beispielsweise kann in einer rotatorischen Synchronmaschine eine volle Umdrehung der Motorwelle durchaus mehreren elektrischen Perioden entsprechen. Dies ist insbesondere bei einer Polzahl größer eins der Fall.

Aus der deutschen Offenlegungsschrift DE 102 15 428 A1 ist ein Verfahren zur Bestimmung der Rotorlage eines festgebremsten Synchronmotors bekannt, wobei eine Vielzahl von Stromvektoren an den Synchronmotor in unterschiedlichen Richtungen angelegt werden und dabei der zum Erzielen einer definierten Auslenkung des Rotors nötige Betrag des Stromvektors ermittelt wird und anschließend eine Berechnung der Rotorlage aus wenigstens einer Winkelposition des Stromvektors, bei der der zum Erzielen der definierten Auslegung des Rotors nötige Betrag des Stromvektors minimal ist, durchgeführt wird.

Aus der DE 10 2004 008250 A1 ist ein Verfahren zur Bestimmung der Rotorlage eines Synchronmotors bekannt, bei welchem eine Vielzahl von in unterschiedliche Richtungen weisenden Stromvektoren angelegt werden und die für eine definierte Auslenkung des Rotors benötigten Beträge der Stromvektoren ermittelt werden. Es werden die Kehrwerte der Beträge der Stromvektoren und die Fourierkoeffizienten der ersten Harmonischen der Kehrwerte ermittelt, um schließlich die Rotorlage anhand der Fourierkoeffizienten zu berechnen.

Aus der DE 10 2005 059477 A1 ist ein Verfahren zur Bestimmung der Startkommutierung eines Synchron- und Reluktanzmotors bekannt, bei welchem der Läufer während des Verfahrens blockiert ist und eine Distortion des Läufers erfasst wird, welche entsteht während der Motor mit einem Nennstrom mit konstantem Betrag und zeitabhängigem Winkelverlauf beaufschlagt wird. Der Startkommutierungswinkel wird schließlich dadurch bestimmt, dass das winkelabhängige Maximum der Distortion des Läufers ermittelt wird.

Der Erfindung liegt die Aufgabe zugrunde, die Bestimmung der Position des Läufers einer Synchronmaschine in Bezug auf den Stator der Synchronmaschine zu verbessern.

Diese Aufgabe wird durch ein Verfahren gemäß Anspruch 1 und eine Verarbeitungseinheit gemäß Anspruch 8 gelöst.

Dabei weist das Verfahren zur Bestimmung der Position des Läufers einer Synchronmaschine in Bezug auf den Stator der Synchronmaschine folgende Verfahrensschritte auf:
- Beaufschlagen der Synchronmaschine mit einer Anzahl von Teststromvektoren, welche alle denselben Strombetrag aufweisen und welche jeweils einen unterschiedlichen Winkel in Bezug auf ein läuferbezogenes d,q-Koordinatensystem aufweisen,
- Ermitteln von Werten einer zur q-Komponente der Teststromvektoren proportionalen, physikalischen Antwortgröße des Läufers während der Beaufschlagung der Synchronmaschine mit den Teststromvektoren,
- Ermitteln der ersten Harmonischen der ermittelten Werte der physikalischen Antwortgröße in Abhängigkeit des Winkels,
- Bestimmen der Position des Läufers in Bezug auf den Stator der Synchronmaschine als jener Nulldurchgang der ersten Harmonischen, in dem eine positive erste Ableitung der ersten Harmonischen vorliegt.

Die Funktion des Verfahrens basiert auf der Ausnützung der proportionalen Abhängigkeit der physikalischen Antwortgröße des Läufers vom Winkel der Teststromvektoren. Dadurch, dass jeder der auf die Synchronmaschine beaufschlagten Teststromvektoren jeweils denselben Betrag aufweist, ist sichergestellt, dass die absolute Größe der jeweiligen Teststromvektoren keinen Einfluss auf die physikalische Antwortgröße hat und letztere ausschließlich durch den jeweiligen Winkel der Teststromvektoren bestimmt wird. Überlegungen bezüglich der physikalischen Antwortgröße werden zweckmäßigerweise im läuferbezogenen d,q-Koordinatensystem durchgeführt, wobei die q-Komponente eines Stromvektors momentenbildend und die d-Komponente eines Stromvektors flussbildend ist.

Wird ein Teststromvektor mit einem Winkel senkrecht zur q-Achse eingeprägt, so hat die physikalische Antwortgröße für diesen Teststromvektor den Wert 0. Dagegen nimmt die physikalische Antwortgröße ihren positiven beziehungsweise negativen Extremwert an, falls der Teststromvektor in Richtung der positiven beziehungsweise negativen q-Achse zeigt. Aufgrund der Geometrie ergibt sich folglich, dass der jeweilige Wert der physikalischen Antwortgröße über eine Sinusfunktion mit dem entsprechenden Winkel verknüpft ist. Wie schon erwähnt, folgt aus der Wahl desselben Betrages für die Teststromvektoren, dass die physikalische Antwortgröße ausschließlich über den Winkel der Teststromvektoren, genauer die q-Komponente der Teststromvektoren, bestimmt wird.

Die physikalische Antwortgröße des Läufers wird während der Beaufschlagung der Synchronmaschine mit den Teststromvektoren in Abhängigkeit des Winkels ermittelt. Aufgrund der oben erklärten Zusammenhänge kann die physikalische Antwortgröße des Läufers in Abhängigkeit des Winkels mathematisch durch die erste Harmonische charakterisiert werden. Folglich wird die erste Harmonische der ermittelten Werte der physikalischen Antwortgröße in Abhängigkeit des Winkels ermittelt. Die erste Harmonische weist zwei Extrema und zwei Nulldurchgänge auf, wobei die Extrema bei Beaufschlagen der Synchronmaschine mit jenen Teststromvektoren liegen, für welche der entsprechende Winkel parallel beziehungsweise antiparallel zur Richtung der positiven q-Achse liegt. Die beiden Nulldurchgänge der ersten Harmonischen können durch unterschiedliches Vorzeichen der ersten Ableitung der Harmonischen in Bezug auf den Winkel von einander unterschieden werden. Die erste Harmonische nimmt den Wert 0 mit einer positiven ersten Ableitung für jenen Fall an, dass der beaufschlagte Stromvektor in Richtung der positiven d-Achse zeigt. Dieses Kriterium wird durch das erfindungsgemäße Verfahren ausgenutzt, um die d-Achse des läuferbezogenen d,q-Koordinatensystems zu bestimmen, was gleichbedeutend mit der Bestimmung der Position des Läufers ist.

Das Beaufschlagen der Synchronmaschine mit Teststromvektoren kann insbesondere durch eine Umrichtereinheit erfolgen, welche Sollwerte für die Teststromvektoren von einer entsprechenden Verarbeitungseinheit erhält. Die Ermittlung der ersten Harmonischen oder deren Nulldurchgang mit positiver erster Ableitung ist beispielsweise durch einen Controller, Mikrocontroller oder durch einen digitalen Signalprozessor (DSP) durchzuführen.

Von Vorteil ist bei dem Verfahren, dass es unabhängig von Sättigungseigenschaften einer Synchronmaschine funktioniert. Dabei verursacht das Verfahren nur minimale Bewegungen und minimale Geräuschbildung und kann mit oder ohne Vorhandensein einer Bremse durchgeführt werden. Das erfindungsgemäße Verfahren ist allgemeingültig und ohne Einschränkung auf Spezialfälle einsetzbar.

Weitere vorteilhafte Ausgestaltungen des Verfahrens gemäß der vorliegenden Erfindung sind den abhängigen Ansprüchen 2 bis 7 zu entnehmen.

Bei einer vorteilhaften Ausgestaltung des Verfahrens gemäß der vorliegenden Erfindung weist das Verfahren die folgenden weiteren Verfahrensschritte auf:
- Ermitteln der Korrelation der ermittelten Werte der physikalischen Antwortgröße und der ermittelten ersten Harmonischen,
- Vergleichen der ermittelten Korrelation mit einem vorgegebenen Mindestwert,
- falls die ermittelte Korrelation kleiner als der vorgegebene Mindestwert ist: Wiederholen des Verfahrens nach Anspruch 1 mit einer Anzahl von weiteren Teststromvektoren, welche jeweils denselben Strombetrag aufweisen und welche jeweils einen unterschiedlichen Winkel in Bezug auf das d,q-Koordinatensystem aufweisen, wobei der Strombetrag der weiteren Teststromvektoren größer ist als der Strombetrag der Teststromvektoren nach Anspruch 1.

Da Synchronmaschinen im industriellen Einsatz oft in Umgebungen mit Vibrationen, Erschütterungen und dergleichen betrieben werden, kann eine fehlerfreie, zuverlässige und präzise Ermittlung der physikalischen Antwortgröße mitunter Schwierigkeiten bereiten. So können Messsignale gestört sein und beispielsweise mit einem Rauschen überlagert sein. Daher ist es sinnvoll, eine Art Plausibilitätstest bezüglich der ermittelten physikalischen Antwortgröße durchzuführen und die Ermittlung zu validieren. Für diesen Zweck wird die Korrelation der ermittelten Werte der physikalischen Antwortgröße und der ermittelten ersten Harmonischen berechnet. Dies kann insbesondere mittels eines Controllers, Mikrocontrollers oder digitalen Signalprozessors (DSP) geschehen.

Um beurteilen zu können, ob die Ermittlung der Werte der physikalischen Antwortgröße eine ausreichende Präzision und Zuverlässigkeit während der Beaufschlagung der Synchronmaschine mit einer Anzahl von Teststromvektoren erreicht hat, wird die Korrelation der ermittelten Werte der physikalischen Antwortgröße und der ermittelten ersten Harmonischen ermittelt, um anschließend mit einem vorgegebenen Mindestwert verglichen zu werden. Dieser vorgegebene Mindestwert ist somit ein Schwellwert, der widerspiegelt, ob die Beaufschlagung der Synchronmaschine mit einer Anzahl von Teststromvektoren zu zufriedenstellenden Ergebnissen geführt hat. Erfahrungsgemäß führt ein vorgegebener Mindestwert in der Größenordnung von beispielsweise 0,8 zu sinnvollen Ergebnissen, das heißt einer zuverlässigen Bestimmung der Position des Läufers.

Sollte die ermittelte Korrelation jedoch kleiner als der vorgegebene Mindestwert sein, so wird das Verfahren mit einer Anzahl von weiteren Teststromvektoren wiederholt. Diese weiteren Teststromvektoren weisen jeweils einen unterschiedlichen Winkel in Bezug auf das d,q-Koordinatensystem auf, wobei sie untereinander denselben Strombetrag aufweisen, welcher größer ist als der Strombetrag der Teststromvektoren nach Anspruch 1. Für den Fall, dass die Beaufschlagung der Synchronmaschine mit den weiteren Teststromvektoren auch nicht zu zufriedenstellenden Ergebnissen geführt hat, kann das Verfahren mit wiederum jeweils vom Betrag her größeren Stromvektoren so oft wiederholt werden, bis zufriedenstellenden Ergebnisse erreicht werden.

Gemäß einer weiteren vorteilhaften Ausgestaltung des Verfahrens gemäß der vorliegenden Erfindung ist die physikalische Antwortgröße die auf den Läufer wirkende Kraft. Die Kraft kann beispielsweise anhand von Sensoren, insbesondere piezoelektrischen Sensoren, Dehnungsmessstreifen oder mikroelektromechanischen Systeme (MEMS) gemessen werden.

Insbesondere kann bei linearen Synchronmaschinen die Kraft basierend auf das Hooksche Gesetz bestimmt werden, wonach die mechanische Spannung gleich dem Produkt von Elastizitätsmodul mit der mechanischen Dehnung ist. Dabei ist die Dehnung die relative Längenänderung des Läufers in Richtung der angreifenden Kraft und die Spannung ist der Quotient aus angreifender Kraft und entsprechender Querschnittsfläche. Der Elastizitätsmodul ist ein Materialkennwert aus der Werkstofftechnik, der für das Läufermaterial als bekannt gelten kann. Folglich kann man durch Messung der Dehnung zum Beispiel mittels Dehnungsmesssteifen unter Kenntnis der Querschnittsfläche die Kraft bestimmten.

Bei rotatorischen Synchronmaschinen, bei denen der Läufer als Rotor ausgeführt ist, kann die Kraft beispielsweise über eine Messung einer Torsion des Rotors bestimmt werden. Die angreifende Kraft resultiert in einem Torsionsmoment, welches das Produkt der Kraft mit dem entsprechenden Hebelarm ist. Der Verdrehwinkel ergibt sich als Produkt des Torsionsmoments mit der relevanten axialen Rotorlänge, wobei das genannte Produkt durch das Produkt von Schubmodul und Torsionsträgheitsmoment dividiert wird. Hierbei ist der Schubmodul ebenfalls ein Materialkennwert aus der Werkstofftechnik, welcher für das Rotormaterial als bekannt vorausgesetzt werden kann und das Torsionsträgheitsmoment ist als geometrische Größe der technischen Mechanik ebenfalls zugänglich. Da der Verdrehwinkel insbesondere mittels Dehnungsmesssteifen gemessen werden kann, kann daraus die Kraft ermittelt werden.

Bei einer weiteren vorteilhaften Ausgestaltung des Verfahrens gemäß der vorliegenden Erfindung ist die physikalische Antwortgröße die Beschleunigung des Läufers. Die Beschleunigung kann beispielsweise dadurch bestimmt werden, dass sie direkt durch Sensoren gemessen wird, wobei insbesondere piezoelektrischer Beschleunigungssensoren, miniaturisierte Beschleunigungssensoren als mikroelektromechanische Systeme (MEMS) verwendet werden können. Weiterhin können Dehnungsmessstreifen oder Sensoren, welche ähnlich einem dynamischen Mikrofon die magnetische Induktion benutzen, zum Einsatz kommen. Letztere Sensoren induzieren durch Bewegung einer an einer Feder aufgehängten magnetischen Testmasse in einer Spule eine elektrische Spannung. Eine indirekte Bestimmung der Beschleunigung zum Beispiel unter Verwendung einer Messung der Geschwindigkeitsänderung oder der Änderung der Positionsänderung des Läufers innerhalb einer bestimmten Zeit ist ebenfalls möglich.

Bei einer weiteren vorteilhaften Ausgestaltung des Verfahrens gemäß der vorliegenden Erfindung wird der Winkel der Teststromvektoren derart gewählt, dass die ermittelten Werte der physikalischen Antwortgröße des Läufers bei zwei aufeinanderfolgenden Beaufschlagungen einander entgegengerichtet sind. Dadurch wird erreicht, dass die aus einer Beaufschlagung mit einem Teststromvektor resultierende Geschwindigkeit beziehungsweise Auslenkung des Läufers bei der darauffolgenden Beaufschlagung zumindest teilweise kompensiert wird. Somit wird während mehreren aufeinanderfolgenden Beaufschlagungen der Synchronmaschine mit Teststromvektoren einer kumulierenden resultierenden Auslenkung des Läufers in eine bestimmte Richtung entgegengewirkt. In anderen Worten wird also beabsichtigt, die kumulative resultierende Beschleunigung während mehreren aufeinanderfolgenden Beaufschlagungen nahe 0 zu halten, so dass der Läufer keine Geschwindigkeit in eine bestimmte Richtung aufnimmt und sich nicht zu weit von seiner Position vor den Beaufschlagungen mit Teststromvektoren entfernt.

Dies kann beispielsweise derart durchgeführt werden, dass der Winkel eines Teststromvektors etwa um 180° gegenüber dem Winkel des unmittelbar vorhergehenden Teststromvektors verschoben ist. Um die gesamte Periode von 0° bis 360° durch die Winkel abzudecken, kann dabei jeder Winkel beispielsweise um 185° beziehungsweise 175° gegenüber dem jeweiligen Winkel des unmittelbar vorhergehenden Teststromvektors verschoben sein. Eine weitere Möglichkeit ist die Auswahl von Winkelpaaren bezüglich aufeinander folgender Teststromvektoren. Ein erstes Winkelpaar wird beispielsweise durch Teststromvektoren mit den Winkeln 10° und 190° und ein zweites Winkelpaar durch Teststromvektoren mit den Winkeln 20° und 200° gebildet. Weitere Winkelpaare können in entsprechender Weise gebildet werden. Somit wird erreicht, dass die resultierende kumulative Beschleunigung während mehrerer aufeinanderfolgender Beaufschlagungen nahe 0 ist, da die jedem einzelnen Teststromvektor entsprechende physikalische Antwortgröße durch einen entsprechenden Teststromvektor kompensiert wird.

Gemäß einer weiteren vorteilhaften Ausgestaltung des Verfahrens gemäß der vorliegenden Erfindung werden zur Bestimmung der Beschleunigung des Läufers die von einem Stromvektor verursachte Positionsänderung des Läufers und die hierfür benötigte Zeit gemessen. Die Beschleunigung wird als Quotient der Positionsänderung und dem Quadrat der hierfür benötigten Zeit berechnet.

Die von einem Stromvektor verursachte Positionsänderung des Läufers kann insbesondere anhand eines Inkrementalgebers bestimmt werden. Synchronmaschinen sind oft mit einem Inkrementalgeber ausgerüstet, wobei diese Art von Geber lediglich die relative Position des Läufers bestimmen kann, insbesondere also die Positionsänderung. Will man die absolute Position des Läufers in Bezug auf den Stator anhand eines Inkrementalgebers bestimmen, so muss der Läufer beispielsweise bei Inbetriebnahme der Synchronmaschine auf eine Referenzposition, beispielsweise eine Nullmarke, gefahren werden, um eine Art Eichung durchzuführen und die Informationen des Inkrementalgeber bezüglich relativer Position des Läufers mit einer absoluten Position bezüglich des Stators zu verknüpfen. Der Vorteil dieser Ausgestaltung des Verfahrens gemäß der vorliegenden Erfindung liegt nun darin, einen solchen Inkrementalgeber zu verwenden, um die absolute Lage des Läufers in Bezug auf den Stator der Synchronmaschine zu bestimmen. Dies wird dadurch erreicht, dass die von einem Stromvektor verursachte Positionsänderung des Läufers anhand des Inkrementalgebers gemessen wird und zusätzlich die für die Positionsänderung benötigte Zeit erfasst wird. Da die von einem Stromvektor verursachte Beschleunigung gleich der gemessenen Positionsänderung geteilt durch das Quadrat der dafür benötigten Zeit ist, kann folglich die jeweilige Beschleunigung für jeden der Teststromvektoren bestimmt werden, beispielsweise durch einen Controller, Mikrocontroller oder digitalen Signalprozessor (DSP). Die derart bestimmten Beschleunigungen werden anschließend verwendet, um die entsprechende erste Harmonische zu ermitteln und schließlich die Position des Läufers in Bezug auf den Stator der Synchronmaschine als jener Nulldurchgang der ersten Harmonischen zu ermitteln, in dem eine positive erste Ableitung der ersten Harmonischen vorliegt.

Die Messung der von einem Stromvektor verursachten Positionsänderung des Läufers kann prinzipiell ebenso von einem Absolutwertgeber durchgeführt werden. Gemäß dieser Ausgestaltung des Verfahrens gemäß der vorliegenden Erfindung wird lediglich die Information der Positionsänderung benötigt, welche der Absolutwertgeber gleichfalls zu Verfügung stellen kann. Der Absolutwertgeber ist zusätzlich dazu geeignet, direkt die absolute Lage des Läufers in Bezug auf den Stator der Synchronmaschine zu bestimmen.

Bei einer weiteren vorteilhaften Ausgestaltung des Verfahrens gemäß der vorliegenden Erfindung weist das Verfahren die folgenden weiteren Verfahrensschritte auf:
- Messen der absoluten Position des Läufers mit einem Absolutwertgeber,
- Berechnen der Abweichung der gemessenen absoluten Position von der mittels der ersten Harmonischen bestimmten Position des Läufers
- Ausgeben einer Fehlermeldung, falls die berechnete Abweichung größer als ein vorgegebener Wert ist.

Die Position des Läufers in Bezug auf den Stator der Synchronmaschine wird anhand jenes Nulldurchgangs der ersten Harmonischen bestimmt, in dem eine positive erste Ableitung der ersten Harmonischen vorliegt. Durch die Verwendung eines Absolutwertgebers kann die Position des Läufers auf eine zweite Art und Weise bestimmt werden, welche unabhängig von der Ermittlung der ersten Harmonischen ist. Die Verwendung zweier unabhängiger Methoden der Positionsbestimmung des Läufers stellt somit eine Redundanz dar, welche für Sicherheitsanwendungen verwendet werden kann. Zu diesem Zweck wird die Abweichung der mittels des Absolutwertgebers gemessenen absoluten Position von der mittels der ersten Harmonischen bestimmten Position des Läufers insbesondere mittels eines Controllers, Mikrocontrollers oder digitalen Signalprozessors (DSP) berechnet. Sollte die berechnete Abweichung größer als ein vorgegebener Wert sein, kann eine Fehlermeldung beispielsweise durch einen Controller, Mikrocontroller oder digitalen Signalprozessor (DSP) insbesondere an eine übergeordnete Steuereinheit ausgegeben werden, welche gegebenenfalls die Synchronmaschine abschalten kann. Um dem Sicherheitsgedanken weiter Rechnung zu tragen, kann die Berechnung der Abweichung durch einen separaten Controller ausgeführt werden, der keine sonstigen Aufgaben übernimmt. Die Übermittlung der Fehlermeldung kann entsprechend über eine zusätzliche oder redundante Kommunikationsverbindung zwischen dem separaten Controller und der übergeordneten Steuerung erfolgen, wobei beispielsweise sicherheitsgerichtete Protokolle, wie SafetyBus p, eingesetzt werden können.

Um das vorangehend geschilderte Verfahren gemäß der vorliegenden Erfindung mit den jeweiligen vorteilhaften Ausgestaltungen auf besonders einfache Art und Weise effektiv und kostengünstig durchführen zu können, wird des Weiteren eine Verarbeitungseinheit geschaffen, mit der das Verfahren nach Anspruch 1 durchgeführt werden kann. Eine solche Verarbeitungseinheit zur Bestimmung der Position des Läufers einer Synchronmaschine in Bezug auf den Stator der Synchronmaschine umfasst:
- Mittel zur Vorgabe von Sollwerten von Teststromvektoren an eine Umrichtereinheit, welche alle denselben Strombetrag aufweisen und welche jeweils einen unterschiedlichen Winkel in Bezug auf ein läuferbezogenes d,q-Koordinatensystem aufweisen,
- Mittel zum Ermitteln von Werten einer zur q-Komponente der Teststromvektoren proportionalen, physikalischen Antwortgröße des Läufers während der Beaufschlagung der Synchronmaschine mit den Teststromvektoren,
- Mittel zum Ermitteln der ersten Harmonischen der ermittelten Werte der physikalischen Antwortgröße in Abhängigkeit des Winkels,
- Mittel zum Bestimmen der Position des Läufers in Bezug auf den Stator der Synchronmaschine als jener Nulldurchgang der ersten Harmonischen, in dem eine positive erste Ableitung der ersten Harmonischen vorliegt.

Die Ermittlung von Werten der physikalischen Antwortgröße kann beispielsweise direkt über entsprechende Sensoren durchgeführt werden, wobei die ermittelten Werte beispielsweise von Controllern, Mikrocontrollern oder digitalen Signalprozessoren (DSP) zur Ermittlung der ersten Harmonischen verwendet werden. Für den Fall, dass ein Sensor zur Ermittlung der physikalischen Antwortgröße eingesetzt wird, und dieser als Geber ausgeführt ist, ist es ebenfalls denkbar, die zuvor genannten Mittel in diesem Geber zu integrieren, so dass die Positionsbestimmung des Läufers praktisch dezentral durchgeführt wird. Dies ermöglicht es, innerhalb einer komplexen Maschine mehr Intelligenz dezentral vorzusehen und eine übergeordnete Steuerung zu entlasten. Gleichzeitig wird der Bedarf an Kommunikation zwischen den einzelnen Maschinenteilen und der übergeordneten Steuerung reduziert.

Prinzipiell kann die Verarbeitungseinheit auch als speicherprogrammierbare Steuerung ausgeführt sein, welche die zuvor genannten Mittel aufweist.

Eine weitere vorteilhafte Ausgestaltung der Verarbeitungseinheit gemäß der vorliegenden Erfindung ist dem abhängigen Anspruch 9 zu entnehmen.

In einer vorteilhaften Ausgestaltung der Verarbeitungseinheit der vorliegenden Erfindung weist die Verarbeitungseinheit weiterhin auf:
- Mittel zum Ermitteln der Korrelation der ermittelten Werte der physikalischen Antwortgröße und der ermittelten ersten Harmonischen und
- Mittel zum Vergleichen der ermittelten Korrelation mit einem vorgegebenen Mindestwert.

Die Ermittlung der Korrelation und der Vergleich der Korrelation mit dem vorgegebenen Mindestwert kann wiederum von einem Controller, Mikrocontroller oder digitalen Signalprozessor (DSP) durchgeführt werden.

Da Messsignale gestört und beispielsweise mit einem Rauschen überlagert sein können, ist es sinnvoll, eine Art Plausibilitätstest bezüglich der ermittelten physikalischen Antwortgröße durchzuführen und die Ermittlung zu validieren. Für diesen Zweck wird die Korrelation der ermittelten Werte der physikalischen Antwortgröße und der ermittelten ersten Harmonischen, beispielsweise mittels eines Controllers, Mikrocontrollers oder digitalen Signalprozessors (DSP) berechnet. Der Vergleich der ermittelten Korrelation mit dem vorgegebenen Mindestwert kann dabei gleichfalls von einem Controller, Mikrocontroller oder digitalen Signalprozessor (DSP) durchgeführt werden.

In einer besonders vorteilhaften Ausgestaltung der Erfindung wird die Verarbeitungseinheit in einem Absolutwertgeber zum Messen der absoluten Position des Läufers eingesetzt, wobei die Verarbeitungseinheit weiterhin aufweist :
- Mittel zum Berechnen der Abweichung der gemessenen absoluten Position von der mittels der ersten Harmonischen bestimmten Position des Läufers und
- Mittel zum Ausgeben einer Fehlermeldung, falls die berechnete Abweichung größer als ein vorgegebener Wert ist.

Durch die Verwendung eines Absolutwertgebers kann die Position des Läufers auf eine Art und Weise bestimmt werden, welche unabhängig von der Ermittlung der ersten Harmonischen und der daraus bestimmten Position des Läufers ist. Die Verwendung zweier unabhängiger Methoden der Positionsbestimmung des Läufers stellt somit eine Redundanz dar, welche für Sicherheitsanwendungen verwendet werden kann. Zu diesem Zweck wird die Abweichung der mittels des Absolutwertgebers gemessenen absoluten Position von der mittels der ersten Harmonischen bestimmten Position des Läufers insbesondere mittels eines Controllers, Mikrocontrollers oder digitalen Signalprozessors (DSP) berechnet.

Sollte die berechnete Abweichung größer als ein vorgegebener Wert sein, kann eine Fehlermeldung beispielsweise durch einen Controller, Mikrocontroller oder digitalen Signalprozessor (DSP) insbesondere an eine übergeordnete Steuereinheit ausgegeben werden, welche gegebenenfalls die Synchronmaschine abschalten kann. Um dem Sicherheitsgedanken weiter Rechnung zu tragen, können die Mittel zum Berechnen der Abweichung als ein separater Controller ausgeführt werden, der keine sonstigen Aufgaben übernimmt. Die Übermittlung der Fehlermeldung kann entsprechend über eine zusätzliche oder redundante Kommunikationsverbindung zwischen dem separaten Controller und der übergeordneten Steuerung erfolgen, wobei beispielsweise sicherheitsgerichtete Protokolle, wie SafetyBus p, eingesetzt werden können.

In einer besonders vorteilhaften Ausgestaltung der Erfindung wird die Verarbeitungseinheit innerhalb einer Steuereinheit für eine Synchronmaschine betrieben, wobei die Steuereinheit eine Umrichtereinheit zur Beaufschlagung der Synchronmaschine mit den Teststromvektoren aufweist. Dabei kann die Steuereinheit beispielsweise in der Umrichtereinheit angeordnet sein. Ferner kann ein Absolutwertgeber zum Messen der absoluten Position des Läufers eingesetzt werden, wobei die Verarbeitungseinheit weiterhin aufweist:
- Mittel zum Berechnen der Abweichung der gemessenen absoluten Position von der mittels der ersten Harmonischen bestimmten Position des Läufers sowie
- Mittel zum Ausgeben einer Fehlermeldung, falls die berechnete Abweichung größer als ein vorgegebener Wert ist.

Selbstverständlich kann eine dermaßen ausgerüstete Steuereinheit dem schon erwähnten Sicherheitsgedanken beispielsweise dadurch Rechnung tragen, dass die Mittel zum Berechnen der Abweichung als ein separater Controller ausgeführt werden, der keine sonstigen Aufgaben übernimmt. Die Übermittlung der Fehlermeldung kann entsprechend über eine zusätzliche oder redundante Kommunikationsverbindung zwischen dem separaten Controller und der übergeordneten Steuerung erfolgen, wobei beispielsweise sicherheitsgerichtete Protokolle, wie SafetyBus p, eingesetzt werden können.

Im Folgenden wird die Erfindung anhand der in den Figuren dargestellten Ausführungsbeispiele näher beschrieben und erläutert. Es zeigen:
- FIG 1: ein Zeigerdiagramm mit statorbezogenem α,β-Koordinatensystem und läuferbezogenem d,q-Koordinatensystem
- FIG 2: ein Zeigerdiagramm mit einem Teststromvektor
- FIG 3: ein Zeigerdiagramm mit mehreren Teststromvektoren
- FIG 4: ein Flussdiagramm des erfindungsgemäßen Verfahrens zur Bestimmung der Position des Läufers einer Synchronmaschine in Bezug auf den Stator der Synchronmaschine
- FIG 5: ein Blockschaltbild einer ersten Ausführungsform einer Steuereinheit gemäß der vorliegenden Erfindung mit einer Synchronmaschine
- FIG 6: einen beispielhaften winkelabhängigen Verlauf der Messwerte der physikalischen Antwortgröße und der ersten Harmonischen
- FIG 7: eine Schemazeichnung einer weiteren Ausgestaltung des Verfahrens gemäß der vorliegenden Erfindung

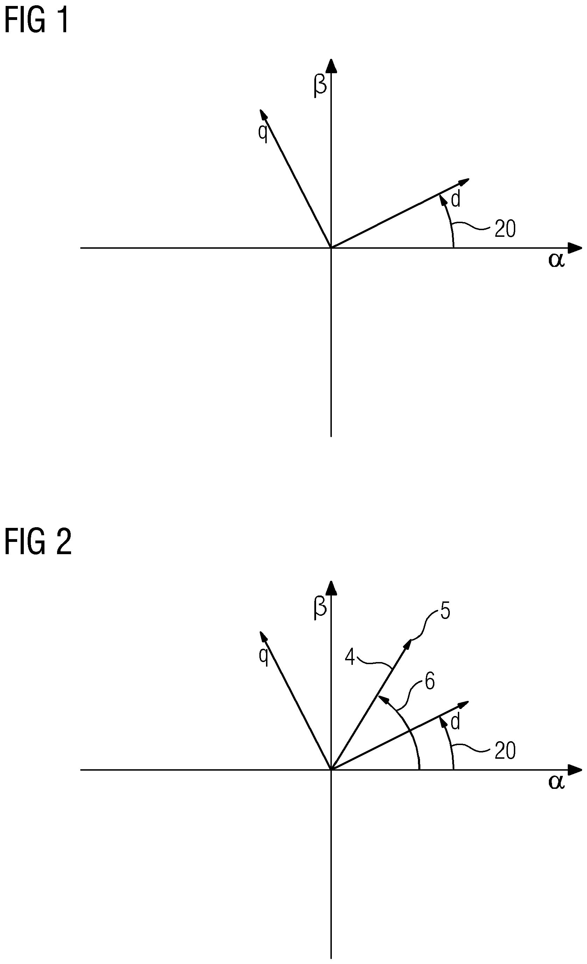

Figur 1 zeigt ein Zeigerdiagramm mit statorbezogenem α,β-Koordinatensystem und läuferbezogenem d,q-Koordinatensystem. Eine Synchronmaschine kann durch die beiden zuvor genannten Koordinatensysteme beschrieben werden. Beide weisen jeweils zwei zueinander senkrecht stehende Achsen auf, wobei das statorbezogene α,β-Koordinatensystem während des Betriebs der Synchronmaschine ruht. Bei Synchronmaschinen bewegt sich das läuferbezogene d,q-Koordinatensystem synchron zum bewegten Erregerfeld, das heißt eine Position 20 eines Läufers 1 ändert sich synchron zum bewegten magnetischen Drehfeld. Für die in Figur 1 nicht dargestellten und hier aufgeführten Bezugszeichen siehe die weiteren Figuren.

Figur 2 zeigt ein Zeigerdiagramm mit einem Teststromvektor. Der Teststromvektor 4 ist bestimmt durch seinen Strombetrag 5 und seinen Winkel 6 in Bezug auf das statorbezogene α,β-Koordinatensystem. Da sich das statorbezogene α,β-Koordinatensystem nicht bewegt, ist bei Beaufschlagung einer Synchronmaschine der jeweilige Winkel 6 der Teststromvektoren 4 bekannt. Insbesondere bei Inbetriebnahme einer Synchronmaschine 2 ist eine Position 20 eines Läufers 1 bei vielen Synchronmaschinen unbekannt. In solchen Fällen bleibt somit der Winkel zwischen der positiven d-Achse des läuferbezogenen d,q-Koordinatensystems und der positiven α -Achse des statorbezogenen α,β-Koordinatensystems zunächst unbekannt. Die vereinfachte Bestimmung dieses Winkels beziehungsweise der Position 20 des Läufers 1 ist Gegenstand dieser Erfindung.

Der Teststromvektor 4 kann beispielsweise durch Beaufschlagung der Statorwicklungen einer Synchronmaschine mit einem dreiphasigen Strom erzeugt werden. Dem Teststromvektor 4 entsprechende drei Phasenströme I_u 41, I_v 42, und I_w 43 können anhand einer α,β-Transformation äquivalent in das ruhende statorbezogene α,β-Koordinatensystem oder anhand einer d,q-Transformation äquivalent in das bewegte läuferbezogene d,q-Koordinatensystem überführt werden. Entlang der Achsen des d,q-Koordinatensystem kann der Teststromvektor 4 in zwei Komponenten zerlegt werden, wobei die d-Komponente des Teststromvektor 4 flussbildend und die q-Komponente des Teststromvektor 4 momentenbildend ist. Für die in Figur 2 nicht dargestellten und hier aufgeführten Bezugszeichen siehe die weiteren Figuren.

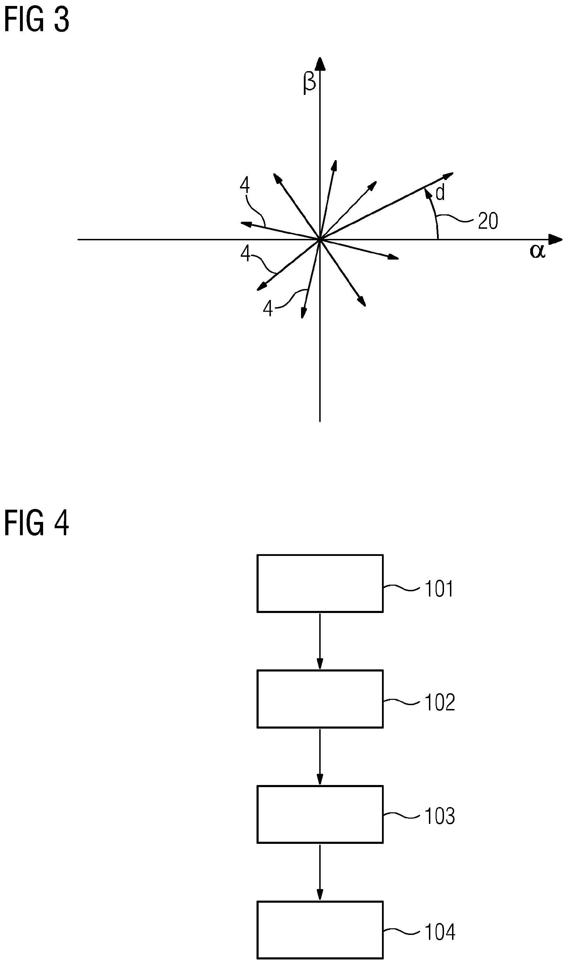

Figur 3 zeigt ein Zeigerdiagramm mit mehreren Teststromvektoren. Jeder der Teststromvektoren 4 weist jeweils denselben Strombetrag 5, jedoch jeweils einen unterschiedlichen Winkel 6 auf. Aufgrund des jeweils selben Strombetrags 5 hängt die q-Komponente jedes Teststromvektors 4 ausschließlich von dessen jeweiligem Winkel 6 ab und nicht von dessen jeweiligem Strombetrag 5. Kann man eine physikalische Antwortgröße 7 bestimmen, beispielsweise durch direkte Messung, wobei die Antwortgröße 7 proportional zur q-Komponente des Teststromvektors 4 ist, so kann man aus der Abhängigkeit der Antwortgröße 7 vom jeweiligem Winkel 6 des beaufschlagten Stromvektors 4 eine Position 20 eines Läufers 1 bestimmen. Das heißt, der Winkel zwischen der positiven d-Achse des läuferbezogenen d,q-Koordinatensystems und der positiven α -Achse des statorbezogenen α,β-Koordinatensystems kann bestimmt werden. Folglich sind die Antwortgröße 7 und der Winkel 6 des jeweiligen beaufschlagten Teststromvektors 4 mathematisch über eine Sinusfunktion miteinander verknüpft. Für die in Figur 3 nicht dargestellten und hier aufgeführten Bezugszeichen siehe die weiteren Figuren.

Figur 4 zeigt ein Flussdiagramm des erfindungsgemäßen Verfahrens zur Bestimmung der Position des Läufers einer Synchronmaschine in Bezug auf den Stator der Synchronmaschine. In Schritt 101 wird die Synchronmaschine 2 mit einer Anzahl von Teststromvektoren 4 beaufschlagt, welche alle denselben Strombetrag 4 aufweisen und welche jeweils einen unterschiedlichen Winkel 6 in Bezug auf ein läuferbezogenes d,q-Koordinatensystem aufweisen. In Schritt 102 werden Werte einer zur q-Komponente der Teststromvektoren 4 proportionalen, physikalischen Antwortgröße 7 des Läufers 1 während der Beaufschlagung der Synchronmaschine 2 mit den Teststromvektoren 4 ermittelt. Die erste Harmonische 53 der ermittelten Werte der physikalischen Antwortgröße 7 in Abhängigkeit des Winkels wird in Schritt 103 ermittelt. Schließlich wird in Schritt 104 die Position 20 des Läufers 1 in Bezug auf den Stator 3 der Synchronmaschine 2 als jener Nulldurchgang der ersten Harmonischen 53 bestimmt, in dem eine positive erste Ableitung der ersten Harmonischen 53 vorliegt. Für die in Figur 4 nicht dargestellten und hier aufgeführten Bezugszeichen siehe die weiteren Figuren.

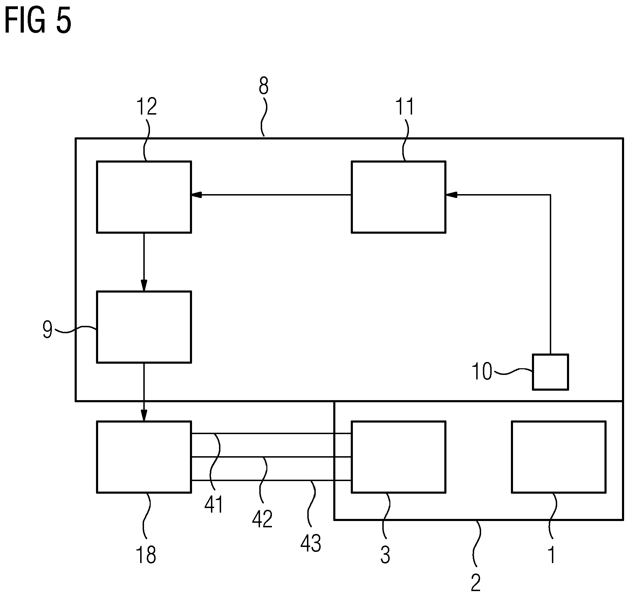

Figur 5 zeigt ein Blockschaltbild einer ersten Ausführungsform einer Steuereinheit gemäß der vorliegenden Erfindung mit einer Synchronmaschine. Die Synchronmaschine 2 weist einen Stator 3 und einen Läufer 1 auf, welcher sich an Position 20 befindet. Eine Verarbeitungseinheit 8 ist vorgesehen, welche Mittel 9 zur Vorgabe von Sollwerten von Teststromvektoren 4 umfasst. Die Sollwerte von Teststromvektoren 4 werden an eine Umrichtereinheit 18 übermittelt, wobei die Teststromvektoren 4 in einem zweiachsigen statorbezogenen α,β-Koordinatensystem durch Angabe ihres jeweiligen Strombetrags 5 und jeweiligen Winkels 6 relativ zur Richtung der positiven α-Achse charakterisiert werden können. Die Teststromvektoren 4 werden so gewählt, dass sie jeweils denselben Strombetrag 5, jedoch jeweils unterschiedliche Winkel 6 aufweisen. Durch eine Transformation können die Teststromvektoren 4 äquivalent jeweils als dreiphasiger Strom mit den Phasenströmen I u 41, I_v 42, und I_w 43 ausgedrückt werden, wobei diese Phasenströme durch die Umrichtereinheit 18 auf die Synchronmaschine 2 gemäß Schritt 101 beaufschlagt werden. Die Beaufschlagung der Synchronmaschine 2 bewirkt eine Reaktion des Läufers, die durch eine physikalische Antwortgröße 7 ausgedrückt werden kann, welche proportional zur d-Komponente des jeweiligen beaufschlagten Stromvektors 4 ist.

Die Verarbeitungseinheit 8 weist zur Durchführung von Schritt 102 weiterhin Mittel 10 zum Ermitteln von Werten der Antwortgröße 7 auf, welche zum Beispiel als auf den Läufer 2 wirkende Kraft oder als Beschleunigung oder Positionsänderung des Läufers 1 ausgeprägt sein kann. Entsprechend können die Mittel 10 zum Ermitteln von Werten der Antwortgröße 7 beispielsweise als Sensoren, insbesondere piezoelektrische Sensoren, Dehnungsmessstreifen oder mikroelektromechanische Systeme (MEMS) oder als Positionsmessgerät, wie zum Beispiel Inkrementalgeber oder Absolutwertgeber ausgeführt sein. Zur Durchführung von Schritt 103 weist die Verarbeitungseinheit 8 zusätzlich Mittel 11 zum Ermitteln der ersten Harmonischen 53 auf, wobei die ermittelten Werte der Antwortgröße 7 an die Mittel 11 zum Ermitteln der ersten Harmonischen 53 übermittelt werden. Die Werte der Antwortgröße 7 hängen von den beaufschlagten Teststromvektoren 4 ab, genauer dem Winkel 6 des jeweiligen Teststromvektors 4, da die Teststromvektoren 4 derart gewählt werden, dass sie jeweils denselben Strombetrag 5 aufweisen. Somit lassen sich die Werte der Antwortgröße 7 als Funktion des Winkels 6 der beaufschlagten Teststromvektoren 4 ausdrücken und eine entsprechende erste Harmonische 53 kann ermittelt werden. Schließlich umfasst die Verarbeitungseinheit 8 Mittel 12 zum Bestimmen der Position 20 des Läufers 1 gemäß Schritt 104. Die ermittelte erste Harmonischen 53 wird durch die Mittel 12 zum Bestimmen der Position 20 des Läufers 1 derart ausgewertet, dass jener Nulldurchgang der ersten Harmonischen 53 mit einer positiven ersten Ableitung, als Position 20 des Läufers 1 ermittelt wird.

Es ist denkbar, dass die Mittel 11 zum Ermitteln der ersten Harmonischen 53 und die Mittel 12 zum Bestimmen der Position 20 des Läufers 1 beispielsweise in Form eines Controllers, Mikrocontrollers oder digitalen Signalprozessors (DSP) ausgeführt sind. Zusätzlich kann dieser Controller, Mikrocontroller oder digitale Signalprozessor (DSP) gegebenenfalls die Funktion der Mittel 9 zur Vorgabe von Sollwerten von Teststromvektoren 4 übernehmen, so dass die Verarbeitungseinheit 8 als Controller, Mikrocontroller oder digitaler Signalprozessor (DSP) mit Mitteln 10 zum Ermitteln von Werten der Antwortgröße ausgeführt ist, welche innerhalb einer Baueinheit angeordnet sein können.

Optional kann die Verarbeitungseinheit 8 erweitert werden durch zusätzliche Mittel 13 zum Ermitteln der Korrelation der ermittelten Werte der Antwortgröße 7 mit der ersten Harmonischen 53. Weiterhin kann die Verarbeitungseinheit 8 zusätzlich Mittel 14 zum Vergleichen der ermittelten Korrelation mit einem vorgegebenen Mindestwert umfassen. Sollte die ermittelte Korrelation kleiner als der vorgegebene Mindestwert sein, so können die Mittel 14 zum Vergleichen der ermittelten Korrelation eine Rückmeldung an die Mittel 9 zur Vorgabe von Sollwerten von Teststromvektoren 4 geben und veranlassen, dass die Beaufschlagung der Synchronmaschine 2 mit Teststromvektoren größeren Strombetrages 5 wiederholt werden muss. Gegebenenfalls können die Mittel 13 zum Ermitteln der Korrelation und die Mittel 14 zum Vergleichen beispielsweise in Form eines Controllers, Mikrocontrollers oder digitalen Signalprozessors (DSP) ausgeführt sein, der auch weitere schon erwähnte Mittel darstellen kann. Für die in Figur 5 nicht dargestellten und hier aufgeführten Bezugszeichen siehe die weiteren Figuren.

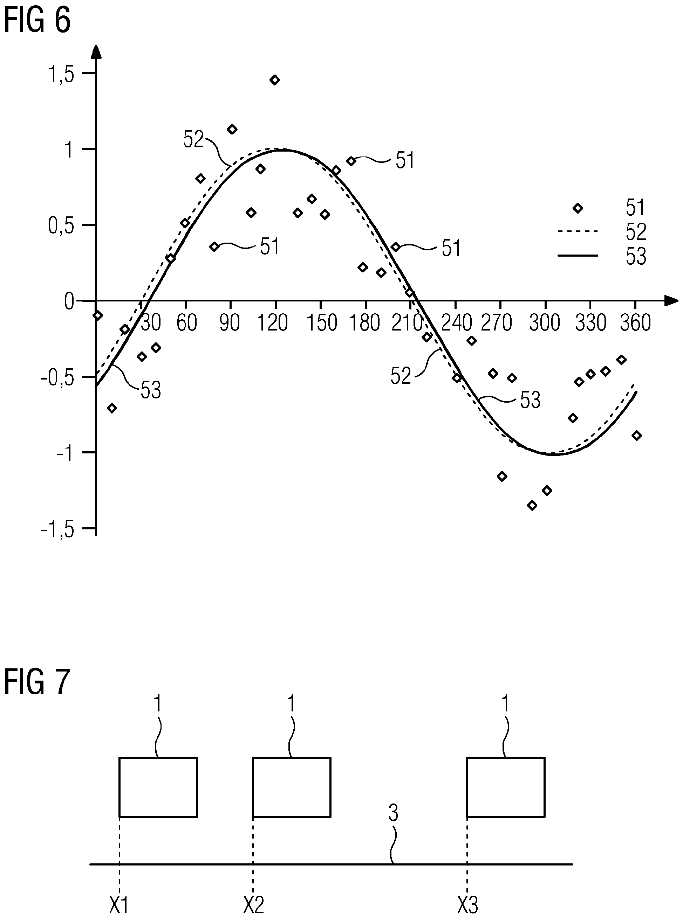

Figur 6 zeigt einen beispielhaften winkelabhängigen Verlauf der Messwerte der physikalischen Antwortgröße und der ersten Harmonischen 53. Neben den Messwerten 51 der physikalischen Antwortgröße 7 und der ersten Harmonischen 53 ist eine ideale Kurve 52 gezeigt. Auf der Ordinatenachse sind die Werte der physikalischen Antwortgröße 7 in Abhängigkeit eines Winkels 6 eines beaufschlagten Teststromvektors 4 aufgetragen, wobei die Winkel 6 auf der Abszissenachse aufgetragen sind.

Zur Erstellung des winkelabhängigen Verlaufs der Messwerte 51 wird eine Synchronmaschine 2 mit dem Teststromvektor 4 beaufschlagt, welcher durch einen Strombetrag 5 und den Winkel 6 in Bezug auf das statorbezogene α,β-Koordinatensystem charakterisiert wird. Die Beaufschlagung der Synchronmaschine 2 bewirkt eine Reaktion des Läufers 1 der Synchronmaschine 2, die durch eine physikalische Antwortgröße 7 ausgedrückt werden kann, welche proportional zur d-Komponente des jeweiligen beaufschlagten Stromvektors 4 ist. Da die jeweiligen Teststromvektoren 4 derart gewählt werden, dass ihr Betrag 5 jeweils gleich ist, sie jedoch jeweils unterschiedliche Winkel 6 aufweisen, hängt die physikalische Antwortgröße 7 nur vom Winkel 6 des jeweiligen beaufschlagten Teststromvektors 4 ab. Wie schon erwähnt, sind die Antwortgröße 7 und der jeweilige Winkel 6 des beaufschlagten Teststromvektors 4 mathematisch über eine Sinusfunktion miteinander verknüpft.

Aufgrund von Vibrationen, Erschütterungen oder von Messungenauigkeiten können die Messwerte 51 der physikalischen Antwortgröße 7 gestört sein und beispielsweise mit einem Rauschen überlagert sein, so dass sie nicht direkt die erwartete Sinusfunktion beschreiben. Dennoch kann eine entsprechende erste Harmonische 53 bestimmt werden, wobei jener Nulldurchgang mit einer positiven ersten Ableitung der Position 20 des Läufers 1 entspricht. Im Beispiel der Figur 6 wird die Position 20 des Läufers 1 zu etwa 35° bestimmt. Zum Vergleich ist weiterhin die ideale Kurve 52 eingetragen, welche die für die physikalische Antwortgröße 7 zu erwartende Sinusfunktion für eine Position 20 des Läufers 1 von 30° ausdrückt.

Für die Auswertung der Messwerte 51 der physikalischen Antwortgröße 7 kann es sinnvoll sein, die Korrelation zwischen letzteren und der ermittelten ersten Harmonischen 53 zu berechnen. Auf diese Weise ist eine Art Plausibilitätstest bezüglich der ermittelten physikalischen Antwortgröße 7 durchführbar und die Ermittlung validierbar. Gegebenenfalls kann die Beauschlagung der Synchronmaschine 2 mit weiteren Teststromvektoren 21 durchgeführt werden, welche alle einen größeren Strombetrag 22 aufweisen und jeweils unterschiedliche Winkel 23 aufweisen. Für die in Figur 6 nicht dargestellten und hier aufgeführten Bezugszeichen siehe die weiteren Figuren.

Figur 7 zeigt eine Schemazeichnung einer weiteren Ausgestaltung des Verfahrens gemäß der vorliegenden Erfindung. Dabei ist eine physikalische Antwortgröße 7 die Beschleunigung eines Läufers 1 einer Synchronmaschine 2 während der Beaufschlagung der Synchronmaschine 2 mit einem Teststromvektor 4. Die Beaufschlagung findet ab dem Zeitpunkt t2 statt, bei welchem sich der Läufer 1 auf der Position x2 befindet. Diese Position wird durch ein Positionsmessgerät, wie beispielsweise einen Inkrementalgeber oder einen Absolutwertgeber gemessen. Zu einem Zeitpunkt t1, welcher vor dem Zeitpunkt t2 der Beaufschlagung liegt, wird die Position x1 des Läufers 1 gemessen. Zum Zeitpunkt t3, welcher noch während der Beaufschlagung liegt, wird wiederum die Position x3 des Läufers 1 gemessen. Zunächst kann die Geschwindigkeit v2 des Läufers 1 vor Beaufschlagung gemäß v2=(x2-x1)/(t2-t1) berechnet werden, wenn eine gleichförmige Bewegung mit konstanter Geschwindigkeit vorliegt. Während der Beaufschlagung der Synchronmaschine 2 mit einem Teststromvektor 4 wird der Läufer mit einer gleichmäßigen Beschleunigung a beschleunigt. Position x3 zum Zeitpunkt t3 ergibt sich gemäß x3=x2 + (t3-t2)*v2 + (t3-t2)²*a/2. Da die Zeitpunkte t1, t2 und t3 bzw. die Zeitdifferenzen gemessen werden können und das Positionsmessgerät die Positionen x1, x2 und x3 des Läufers 1 messen kann, ist die Beschleunigung a die einzige Unbekannte in den oben genannten Beziehungen und kann mittels einfacher Umformungen und Berechnungen ermittelt werden. Für die in Figur 7 nicht dargestellten und hier aufgeführten Bezugszeichen siehe die weiteren Figuren.

## Patentansprüche

1. Verfahren zur Bestimmung der Position (20) des Läufers (1) einer Synchronmaschine (2) in Bezug auf den Stator (3) der Synchronmaschine (2) mit folgenden Verfahrensschritten:
- Beaufschlagen der Synchronmaschine (2) mit einer Anzahl von Teststromvektoren (4), welche alle denselben Strombetrag (5) aufweisen und welche jeweils einen unterschiedlichen Winkel (6) in Bezug auf ein läuferbezogenes d,q-Koordinatensystem aufweisen,
- Ermitteln von Werten einer zur q-Komponente der Teststromvektoren proportionalen, physikalischen Antwortgröße (7) des Läufers während der Beaufschlagung der Synchronmaschine (2) mit den Teststromvektoren (4),
- Ermitteln der ersten Harmonischen (53) der ermittelten Werte der physikalischen Antwortgröße (7) in Abhängigkeit des Winkels (6),
- Bestimmen der Position (20) des Läufers (1) in Bezug auf den Stator (3) der Synchronmaschine (2) als jener Nulldurchgang der ersten Harmonischen (53), in dem eine positive erste Ableitung der ersten Harmonischen (53) vorliegt.

2. Verfahren nach Anspruch 1 mit den weiteren Verfahrensschritten:
- Ermitteln der Korrelation der ermittelten Werte der physikalischen Antwortgröße (7) und der ermittelten ersten Harmonischen (53),
- Vergleichen der ermittelten Korrelation mit einem vorgegebenen Mindestwert,
- falls die ermittelte Korrelation kleiner als der vorgegebene Mindestwert ist: Wiederholen des Verfahrens nach Anspruch 1 mit einer Anzahl von weiteren Teststromvektoren (21), welche jeweils denselben Strombetrag (22) aufweisen und welche jeweils einen unterschiedlichen Winkel (23) in Bezug auf das d,q-Koordinatensystem aufweisen, wobei Strombetrag (22) der weiteren Teststromvektoren (21) größer ist als der Strombetrag (5) der Teststromvektoren (4) nach Anspruch 1.

3. Verfahren nach Anspruch 1 oder 2, wobei die physikalische Antwortgröße (7) die auf den Läufer (1) wirkende Kraft ist.

4. Verfahren nach Anspruch 1 oder 2, wobei die physikalische Antwortgröße (7) die Beschleunigung des Läufers (1) ist.

5. Verfahren nach einem der vorgehenden Ansprüche, wobei der Winkel (6) der Teststromvektoren (4) derart gewählt wird, dass die ermittelten physikalischen Antwortgrößen (4) des Läufers bei zwei aufeinanderfolgenden Beaufschlagungen der Synchronmaschine (1) mit den Teststromvektoren (4) einander entgegengerichtet sind.

6. Verfahren nach Anspruch 4, wobei zur Bestimmung der Beschleunigung des Läufers die von einem der Stromvektoren (4) verursachte Positionsänderung des Läufers (1) und die hierfür benötigte Zeit gemessen werden und die Beschleunigung als Quotient der Positionsänderung und dem Quadrat der hierfür benötigten Zeit berechnet wird.

7. Verfahren nach einem der vorgehenden Ansprüche mit den weiteren Verfahrensschritten:
- Messen der absoluten Position (20) des Läufers mit einem Absolutwertgeber,
- Berechnen der Abweichung der gemessenen absoluten Position (20) von der mittels der ersten Harmonischen (53) bestimmten Position (20) des Läufers (1)
- Ausgeben einer Fehlermeldung, falls die berechnete Abweichung größer als ein vorgegebener Wert ist.

8. Verarbeitungseinheit (8) zur Bestimmung der Position (20) des Läufers (1) einer Synchronmaschine (2) in Bezug auf den Stator(3) der Synchronmaschine (2) mit
- Mitteln (9) zur Vorgabe von Sollwerten von Teststromvektoren (4) an eine Umrichtereinheit (18), welche alle denselben Strombetrag (5) aufweisen und welche jeweils einen unterschiedlichen Winkel (6) in Bezug auf ein läuferbezogenes d,q-Koordinatensystem aufweisen,
- Mitteln (10) zum Ermitteln von Werten einer zur q-Komponente der Teststromvektoren (4) proportionalen, physikalischen Antwortgröße (7) des Läufers (1) während der Beaufschlagung der Synchronmaschine (2) mit den Teststromvektoren (4),
- Mitteln (11) zum Ermitteln der ersten Harmonischen (53) der ermittelten Werte der physikalischen Antwortgröße (7) in Abhängigkeit des Winkels (6),
- Mitteln (12) zum Bestimmen der Position (20) des Läufers (1) in Bezug auf den Stator (3) der Synchronmaschine (2) als jener Nulldurchgang der ersten Harmonischen (53), in dem eine positive erste Ableitung der ersten Harmonischen (53) vorliegt.

9. Verarbeitungseinheit (8) nach Anspruch 8 mit
- Mitteln (13) zum Ermitteln der Korrelation der ermittelten Werte der physikalischen Antwortgröße (7) und der ermittelten ersten Harmonischen (53) und
- Mitteln (14) zum Vergleichen der ermittelten Korrelation mit einem vorgegebenen Mindestwert.

10. Absolutwertgeber (15) zum Messen der absoluten Position (20) des Läufers (1) mit
- einer Verarbeitungseinheit (8) nach Anspruch 8 oder 9, wobei die Verarbeitungseinheit (8) weiterhin aufweist:
- Mittel (16) zum Berechnen der Abweichung der gemessenen absoluten Position (20) von der mittels der ersten Harmonischen (53) bestimmten Position (20) des Läufers (1) und
- Mittel (17) zum Ausgeben einer Fehlermeldung, falls die berechnete Abweichung größer als ein vorgegebener Wert ist.

11. Steuereinheit (19) für eine Synchronmaschine (2) mit
- einer Verarbeitungseinheit (8) nach Anspruch 8 oder 9 und
- einer Umrichtereinheit (18) zur Beaufschlagung der Synchronmaschine (2) mit den Teststromvektoren (4).

## Claims

1. Method for determining the position (20) of the armature (1) of a synchronous machine (2) relative to the stator (3) of the synchronous machine (2), comprising the following method steps:
- applying a number of test current vectors (4) to the synchronous machine (2), each of which has the same current magnitude (5) and each of which has a different angle (6) relative to an armature-related d,q system of coordinates,
- ascertaining values of a physical response quantity (7) of the armature, said quantity being proportional to the q component of the test current vectors, during the application of the test current vectors (4) to the synchronous machine (2),
- ascertaining the first harmonic (53) of the ascertained values of the physical response quantity (7) as a function of the angle (6), and
- determining the position (20) of the armature (1) relative to the stator (3) of the synchronous machine (2) as that zero crossing of the first harmonic (53) in which a positive first derivation of the first harmonic (53) is present.

2. Method according to claim 1, comprising the further method steps:
- ascertaining the correlation between the ascertained values of the physical response quantity (7) and the ascertained first harmonic (53),
- comparing the ascertained correlation with a predetermined minimal value, and
- if the ascertained correlation is less than the predetermined minimal value: repeating the method according to claim 1 using a number of further test current vectors (21), each of which has the same current magnitude (22) and each of which has a different angle (23) relative to the d,q system of coordinates, wherein the current magnitude (22) of the further test current vectors (21) is greater than the current magnitude (5) of the test current vectors (4) according to claim 1.

3. Method according to claim 1 or 2, wherein the physical response quantity (7) is the force acting on the armature (1).

4. Method according to claim 1 or 2, wherein the physical response quantity (7) is the acceleration of the armature (1).

5. Method according to one of the preceding claims, wherein the angle (6) of the test current vectors (4) is selected such that the ascertained physical response quantities (4) of the armature oppose each other in two consecutive applications of the test current vectors (4) to the synchronous machine (1).

6. Method according to claim 4, wherein for the purpose of determining the acceleration of the armature, provision is made for measuring the change in position of the armature (1) that is caused by one of the current vectors (4) and the time that is required for this change, and the acceleration is calculated as a quotient of the change in position and the square of the time that is required for this change.

7. Method according to one of the preceding claims, comprising the further method steps:
- measuring the absolute position (20) of the armature using an absolute value transducer,
- calculating the deviation of the measured absolute position (20) from the position (20) of the armature (1) that was determined by means of the first harmonic (53), and
- outputting an error message if the calculated deviation is greater than a predetermined value.

8. Processing unit (8) for determining the position (20) of the armature (1) of a synchronous machine (2) relative to the stator (3) of the synchronous machine (2), comprising
- means (9) for specifying reference values of test current vectors (4), each of which has the same current magnitude (5) and each of which has a different angle (6) relative to an armature-related d,q system of coordinates, to a converter unit (18),
- means (10) for ascertaining values of a physical response quantity (7) of the armature (1), said quantity being proportional to the q component of the test current vectors (4), during the application of the test current vectors (4) to the synchronous machine (2),
- means (11) for ascertaining the first harmonic (53) of the ascertained values of the physical response quantity (7) as a function of the angle (6), and
- means (12) for determining the position (20) of the armature (1) relative to the stator (3) of the synchronous machine (2) as that zero crossing of the first harmonic (53) in which a positive first derivation of the first harmonic (53) is present.

9. Processing unit (8) according to claim 8, comprising
- means (13) for ascertaining the correlation between the ascertained values of the physical response quantity (7) and the ascertained first harmonic (53), and
- means (14) for comparing the ascertained correlation with a predetermined minimal value.

10. Absolute value transducer (15) for measuring the absolute position (20) of the armature (1), comprising
- a processing unit (8) according to claim 8 or 9,
wherein said processing unit (8) further has:
- means (16) for calculating the deviation of the measured absolute position (20) from the position (20) of the armature (1) that was determined by means of the first harmonic (53), and
- means (17) for outputting an error message if the calculated deviation is greater than a predetermined value.

11. Control unit (19) for a synchronous machine (2), comprising
- a processing unit (8) according to claim 8 or 9, and
- a converter unit (18) for applying the test current vectors (4) to the synchronous machine (2).

## Revendications

1. Procédé de détermination de la position (20) du rotor (1) d'une machine (2) synchrone par rapport au stator (3) de la machine (2) synchrone, comprenant les stades de procédé suivants :
- alimentation de la machine (2) synchrone en un certain nombre de vecteurs (4) de courant de test, qui ont tous la même valeur absolue (5) de courant et qui ont chacun un angle (6) différent par rapport à un système de coordonnées d, q rapporté au rotor,
- détermination de valeurs d'une grandeur (7) physique de réponse proportionnelle à la composante q des vecteurs de courant de test du rotor pendant l'alimentation de la machine (2) synchrone en les vecteurs (4) de courant de test,
- détermination du premier harmonique (53) de la valeur déterminée de la grandeur (7) physique de réponse en fonction de l'angle (6),
- détermination de la position (20) du rotor (1) par rapport au stator (3) de la machine (2) synchrone, comme étant le passage par zéro du premier harmonique (53) où il y a une première dérivée positive du premier harmonique (53).

2. Procédé suivant la revendication 1, comprenant les stades de procédé supplémentaires :
- détermination de la corrélation entre les valeurs déterminées de la grandeur (7) physique de réponse et le premier harmonique (53) déterminé,
- comparaison de la corrélation déterminée à une valeur minimum donnée à l'avance,
- si la corrélation déterminée est plus petite que la valeur minimum déterminée à l'avance : répétition du procédé suivant la revendication 1 avec un nombre d'autres vecteurs (21) de courant de test, qui ont chacun la même valeur absolue (22) de courant et qui ont chacun un angle (23) différent par rapport au système de coordonnées d, q, la valeur absolue (22) du courant des autres vecteurs (21) de courant de test étant plus grande que la valeur absolue (5) de courant des vecteurs (4) de courant de test suivant la revendication 1.

3. Procédé suivant la revendication 1 ou 2, dans lequel la grandeur (7) physique de réponse est la force appliquée au rotor (1).

4. Procédé suivant la revendication 1 ou 2, dans lequel la grandeur (7) physique de réponse est l'accélération du rotor (1).

5. Procédé suivant l'une des revendications précédentes, dans lequel on choisit l'angle (6) des vecteurs (4) de courant de test de manière à ce que les grandeurs (4) physiques de réponse déterminées du rotor soient, lors de deux alimentations successives de la machine (1) synchrone en les vecteurs (4) de courant de test, de sens opposé l'une à l'autre.

6. Procédé suivant la revendication 4, dans lequel, pour déterminer l'accélération du rotor, on mesure la variation de position, provoquée par l'un des vecteurs (4) de courant, du rotor (1) et le temps nécessaire à cet effet, et on calcule l'accélération comme étant le quotient de la variation de position par le carré du temps nécessaire à cet effet.

7. Procédé suivant l'une des revendication précédentes, comprenant le stade de procédé supplémentaire :
- mesure de la position (20) absolue du rotor par un indicateur de valeur absolue,
- calcul de l'écart entre la position (20) absolue mesurée et la position (20) déterminée au moyen du premier harmonique (53) du rotor (1),
- émission d'un avertissement d'erreur, si l'écart calculé est plus grand qu'une valeur donnée à l'avance.

8. Unité (8) de traitement pour déterminer la position (20) du rotor (1) d'une machine (2) synchrone par rapport au stator (3) de la machine (2) synchrone, comprenant
- des moyens (9) de prescription de valeurs de consigne de vecteurs (4) de courant de test à une unité (18) de convertisseur, qui ont tous la même valeur absolue (5) de courant et qui ont chacun un angle (6) différent par rapport à un système de coordonnées d, q, rapporté au rotor,
- des moyens (10) de détermination de valeurs d'une grandeur (7) physique de réponse proportionnelle à la composante q des vecteurs (4) de courant de test du rotor (1) pendant l'alimentation de la machine (2) synchrone en les vecteurs (4) de courant de test,
- des moyens (11) de détermination du premier harmonique (53) des valeurs déterminées de la grandeur (7) physique de réponse en fonction de l'angle (6),
- des moyens (12) de détermination de la position (20) du rotor (1) par rapport au stator (3) de la machine (2) synchrone, comme étant le passage par zéro du premier harmonique (53) où il y a une première dérivée positive du premier harmonique (53).

9. Unité (8) de traitement suivant la revendication 8, comprenant
- des moyens (13) de détermination de la corrélation entre les valeurs déterminées de la grandeur (7) physique de réponse et le premier harmonique (53) déterminé et
- des moyens (14) de comparaison de la corrélation déterminée à une valeur minimum donnée à l'avance.

10. Indicateur (15) de valeur absolue pour mesurer la position (20) absolue du rotor (1), comprenant
- une unité (8) de traitement suivant la revendication 8 ou 9, l'unité (8) de traitement ayant, en outre :
- des moyens (16) de calcul de l'écart entre la position (20) absolue mesurée et la position (20) déterminée au moyen du premier harmonique (53) du rotor (1) et
- des moyens (17) d'émission d'une indication d'erreur, si l'écart calculé est plus grand qu'une valeur donnée à l'avance.

11. L'unité (19) de commande d'une machine (2) synchrone, comprenant
- une unité (8) de traitement suivant la revendication 8 ou 9 et
- une unité (18) de convertisseur pour alimenter la machine (2) synchrone en les vecteurs (4) de courant de test.
